Europäisches Patentamt

European Patent Office

Office européen des brevets

(19)

(11) Veröffentlichungsnummer: **0 182 206**
**B1**

(12) **EUROPÄISCHE PATENTSCHRIFT**

(45) Veröffentlichungstag der Patentschrift: **27.06.90**

(51) Int. Cl.⁵: **C 08 G 65/44,** B 01 J 10/00

(21) Anmeldenummer: **85114158.0**

(22) Anmeldetag: **07.11.85**

(54) **Verfahren und Vorrichtung zur Herstellung von Polyphenylenethern.**

(30) Priorität: **17.11.84 DE 3442117**

(43) Veröffentlichungstag der Anmeldung:
**28.05.86 Patentblatt 86/22**

(45) Bekanntmachung des Hinweises auf die
Patenterteilung:
**27.06.90 Patentblatt 90/26**

(84) Benannte Vertragsstaaten:
**BE DE FR GB NL**

(56) Entgegenhaltungen:
**EP-A-0 087 670
EP-A-0 103 154
WO-A-83/03833
AU-A-6 624 865
DE-A-3 410 386
US-A-3 432 469
US-A-4 503 214**

(73) Patentinhaber: **BASF Aktiengesellschaft
Carl-Bosch-Strasse 38
D-6700 Ludwigshafen (DE)**

(72) Erfinder: **Brandt, Hermann, Dr.
Keltenstrasse 30
D-6707 Schifferstadt (DE)**
Erfinder: **Fischer, Hermann, Dr.
Hardenburgstrasse 33
D-6703 Limburgerhof (DE)**
Erfinder: **Dreher, Hermann, Dr.
Im Waldwinkel 5
D-6104 Seeheim-Jugenheim 1 (DE)**
Erfinder: **Heil, Eduard
Hardenburgstrasse 4
D-6703 Limburgerhof (DE)**
Erfinder: **Hambrecht, Juergen, Dr.
Werderstrasse 30
D-6900 Heidelberg (DE)**
Erfinder: **Naarmann, Herbert, Dr.
Haardtblick 15
D-6719 Wattenheim (DE)**
Erfinder: **Echte, Adolf, Dr.
Leuschnerstrasse 42
D-6700 Ludwigshafen (DE)**
Erfinder: **Gausepohl, Hermann, Dr.
Neuweg 10
D-6704 Mütterstadt (DE)**

EP 0 182 206 B1

(72) Erfinder: **Siebel, Peter, Dr.**
**Trifelsring 20**
**D-6703 Limburgerhof (DE)**
Erfinder: **Swoboda, Johann, Dr.**
**Neuwiesenstrasse 28**
**D-6700 Ludwigshafen (DE)**
Erfinder: **Schwoebel, Gerd**
**Leininger Strasse 51**
**D-6719 Wattenheim (DE)**
Erfinder: **Nikles, Albert**
**Am Dorfzaun 1**
**D-6700 Ludwigshafen (DE)**

**Beschreibung**

Die Erfindung bezieht sich auf ein Verfahren zur Herstellung von Polyphenylenethern nach dem Oberbegriff des Anspruchs 1 sowie auf eine Vorrichtung zur Durchführung des Verfahrens.

Polyphenylenether und Verfahren zu ihrer Herstellung sind beispielsweise aus den US-Patentschriften 3 306 874 und 3 306 875 bekannt. Danach wird die Polymerisation durch oxidative Kupplung einwertiger Phenole in einem oder mehreren Rührreaktoren, die mit Kühlschlangen und Mantelkühlung sowie mit einem Gaseinleutungsrohr versehen sind, unter Vorlage des Katalysatorkomplexes aus Cu-Salzen und Aminen und der Phenole oder unter teilweisem oder vollständigem Zulauf des Katalysatorkomplexes und/oder der Phenole diskontinuierlich durchgeführt. Der Sauerstoff wird in konstanter Menge pro Zeiteinheit zudosiert.

Aus der EP—A 287 670 ist ein Verfahren zur Herstellung von Polyphenylenethern bekannt, wobei die Umsetzung in einem Treibstrahlreaktor erfolgt.

Diese fast vollständig abgasfreie ausschließlich diskontinuierliche Verfahrensform erfordert aus sicherheitstechnischen Gründen eine genaue Einhaltung der Druck- bzw. Partialdruckbedingungen und bei Beendigung der Reaktion enorme Inertgasüberdrücke von 100 bar.

Weiterhin ist in WO 83/03833 ein Verfahren beschrieben, bei dem monomere Phenole zusammen mit Lösungsmittel einem sogenanntnen Begasungsrührreaktor, in dem ein Katalysatorkomplex vorgelegt ist, mit konstanter Sauerstofzuführ über einen bestimmten Zeitraum unter konstanter Geschwindigkeit mit dem Ziel zudosiert werden, das Molekulargewicht der Polyphenylenether gezielt umzustellen bzw. die Nebenproduktbildung zu 4,4-Diphenochinonen zu reduzieren.

Die bekannten Verfahren, insbesondere die dort praktizierte Sauerstoffdosierung befriedigen jedoch nicht in jeder Hinsicht. Um die Emission so niedrig wie möglich zu halten, ist es erforderlich, den Inertgasanteil im Abgas niedrig zu halten. Dabei lassen sich explosive Gasgemische nur dann zuverlässig vermeiden, wenn der Gas-holdup in der Flüssigphase gering ist, was zwangsläufig zu einer geringem Raum-Zeit-Ausbeute führt. Wird dagegen die Raum-Zeit-Ausbeute durch einen entsprechenden hohen Sauerstoffdurchsatz erhöht, erhält man durch die zur Vermeidung einer explosiblen Gasatmosphäre notwendige Inertgasverdünnung hohe Emissionswerte und damit Verluste an flüchtigen Bestandteilen des Reaktionsgemisches. Ein konstanter Gaseintrag bzw. eine nicht an der Reaktion und Nebenproduktbildung orientierte kontrollierte Sauerstoffzufuhr birgt zudem den Nachteil, daß die für die Gasdispergierung aufzubringende Dissipationsenergie nicht anforderungsgemäß, sondern im Überschuß eingebracht werden muß.

Darüber hinaus arbeiten die genannten Verfahren aufgrund mangelnder Ausnutzung, vorhandener Anlagenkapazitäten unwirtschaftlich. Insbesondere die Kapazität des Wärmetauschers wird nur während der Olimerisierungsphase vollständig ausgenutzt.

Es war Aufgabe der Erfindung, die Herstellung von Polyphenylenethern dahingehend zu verbessern, daß bei möglichst hohem Raum-Zeit-Ausbeuten, geringer Nebenproduktbildung, minimalen Emissionen an Gas und flüchtigen Bestandteilen die oxidative Kupplung von Phenolen mit Sauerstoff wirtschaftlich und sicher durchgeführt werden kann.

Diese Aufgabe wird durch die Maßnahmen nach den Patentansprüchen gelöst.

Unter hochmolekularen Polyphenylenethern im Simme der Erfindung werden die durch oxidative Kupplung von 2,6-Dialkyl- und/oder 2,3,6-Trialkylphenolen zu einer Kette alkylsubstituierter, in para-Stellung durch Sauerstoffatome etherartig gebundene Benzolringe verstanden. Die Polymeren weisen zahlenmittlere Molekulargewichte von 10 000 bis 30 000, bevorzugt 20 000 bis 30 000, bestimmt nach der in "Macromolecular Syntheses" 1 (1978), Seite 83 beschriebenen Methode, auf. Hochmolekulare Polyphenylenether sind aus US—PS 3 661 848, US—PS 3 219 625 oder US—PS 3 378 505 bekannt.

Die zur Herstellung der hochmolekularen Polyphenylether verwendeten einwartigen Phenole, die in den beiden ortho-Stellungen, nicht aber in der para-Stellung Alkylsubstituenten aufweisen, sind übliche Phenole wie 2,6-Dimethylphenol, 2,6-Diethylphenol, 2-Methyl-6-ethylphenol, 2-Methyl-6-tertiär-butylphenol, 2-Methyl-6-propylphenol, 2,6-Dibutylphenol, 2,3,6-Trimethylphenol sowie Gemischt dieser Phenole.

Bevorzugt wird das für die Polymerisation vorgesehene einwertige Phenol mit einem o-Kresol- und p-Kresol-Anteil von jeweils weniger als 0,1 Gew.% eingesetzt. Besonders bevorzugt wird ein einwertiges Phenol der oxidativen Kupplung unterzogen, das weniger als 0,05 Gew.% o-Kresol und weniger als 0,01 Gew.% p-Kresol enthält. Insbesondere bevorzugt ist ein Verfahren, bei dem Phenol, m-Kresol und mehrkernige Phenole zu weniger als 0,02 Gew.% in den Ausgangsstoffen enthalten sind.

Bei dem für die oxidative Kupplung verwendeten Katalysatorkomplex handelt es sich um eine Kombination aus einem oder mehreren Aminen, wie Dibutylamin, Diethylamin, N,N'-Di-tert.-butylethylendiamin, Picolin, Chinolin, Pyridinbasen, Triisopropylamin, Dimethylbutylamin, Dimethylisopropanolamin, Triethanolamin, Triisopropanolamin, Diisopropanolamin oder N-Butylimidazol mit einem Kupfersalz, wie Kupfer-I-Bromid, Kupfer-I-Chlorid, Kupfer-I-Jodid, Kupfer-II-Acetat, Kupfer-II-Propionat, Kupfer-II-Acetessigester oder Kupfer-II-Acetylacetonat.

Kupfer-I/II-halogenide können dabei auch aus Kupferoxid durch Umsetzung mit Halogenwasserstoff erzeugt werden.

Ein bevorzugter Bereich bei der Menge der eingesetzten Amine liegt üblicherweise bei 2,0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalz wird gering gehalten und variiert vorzugsweise von 0,2 bis 2,5 Mol pro 100 Mol des Monomeren.

Die oxidative Kupplung kann jedoch auch in Gegenwart von Mn-Chelatkomplexen durchgeführt werden, wie dies beispielsweise in der DE—OS 27 52 294 beschrieben ist. Vorzugsweise werden Mn-II-hydroxyoxim-Chelatkomplex verwendet.

Der Anteil des Lösungsmittels liegt üblicherweise im Bereich von 1:1 bis 20:1, d.h. maximal bis zu einem Überschub des 20-fachen an Lösungsmittel, bezogen auf das Monomere. Es soll als Lösungsmittel ein aromatischer $C_7$- bis $C_{10}$-Kohlenwasserstoff verwendet werden, der gegebenenfalls noch geringe Mengen eines Alkanols enthalten kann. Geeignete Kohlenwasserstoffe sind insbesondere Ethylbenzol, Xylol, Diethylbenzol oder deren Gemische, wobei vorzugsweise Ethylbenzol doer Toluol verwendet werden. Geeignete Alkanole sind bekannt, z.B. Ethanol und/oder Isopropanol. Die Lösungsmittel werden bevorzugt im Bereich von 1:1 bis 10:1 Gewichtsteile, bezogen auf das monomere Phenol, eingesetzt.

Darüber hinaus kann gemäß der US—PS 3 544 515 die Reaktionsmischung einen Aktivator wie ein Diarylguanidin, ein Diarylformamidin oder Alkalimetall enthalten.

Bei dem erfindungsgemäßen Polymerisationsverfahren erfolgt die Umsetzung der einwertigen Phenole in wenigstens zwei Reaktionszonen. Diese bestehen vorzugsweise zum einen aus einem Treibstrahlreaktor und zum anderen aus einem Rührreaktor. Zwischen den Reaktionszonen sind Wärmetauscher und ein Förderaggregat vorgesehen. Zur oxidativen Kupplung werden dem Treibstrahlreaktor etwa 60% bis 100% und dem Rührreaktor 0 bis etwa 40% der stöchiometrisch erforderlichen Sauerstoffmenge zugeführt. Vorzugsweise wird der Sauerstoff so zugeführt, daß mehr als 95% der Sauerstoffmenge umgesetzt werden. Unter der stöchiometrisch erforderlichen Menge Sauerstoff ist die Menge zu verstehen, die benötigt wird, um die Phenole zu Polyphenylenethern mit Grenzviskositäten von 0,4 bis 1,0 dl/g, gemessen bei 25°C in Chloroform, zu kuppeln. Die oxidative Kupplung wird dabei entweder unter Vorlage der gesamten Monomeren-, Lösungsmittel- und Katalysatormenge oder unter Vorlage der gesamten Katalysatormenge zusammen mit einem Teil des Lösungsmittels und gegebenenfalls des Phenols und unter Zulauf der restlichen Phenolmenge mit oder ohne Lösungsmittel durchgeführt. Bei dieser Fahrweise liegen zu Beginn des Zulaufs bis zu 90 Vol.% der flüssigen Anteile des gesamten Reaktionsgemisches in den Reaktionszonen Vor. Es hat sich gezeigt, daß dadurch der Anteil an Nebenprodukten, wie 3,3',5,5-Tetramethyl-4,4'- diphenochinon, bezogen auf das eingesetzte Phenol, unter 0,7% liegt.

Die oxidative Kupplung wird kontinuierlich oder diskontinuierlich unter weitgehend isothermen und isobaren Bedingungen bei im allgemeinen 15 bis 50°C, vorzugsweise 25 bis 30 und bei 1 bis 10 bar, vorzugsweise 1 bis 4 bat absolut durchgeführt. Unter weitgehend isothermen Bedingungen soll verstanden werden, daß die Temperatur am Ausgang der Wärmetauscher lediglich in einem Bereich von ±3°C schwankt. Weitgehend isobare Bedingungen soll heißen, daß der Druck in der Gasphase der zweiten Reaktionszone etwa ±0,2 bar abweicht. Die für eine isotherme Fahrweise eingesetzten Wärmetauscher sind so ausgelegt, daß eine Entmischung der Gas-Flüssigdispersion verhindert wird.

Das Förderaggregat hat die Aufgabe, eine für die Abführung der Reaktionswärme im Wärmetauscher notwendige Fördermenge bereitzustellen, und die für die Dispergierung der Gasphase in der ersten Reaktionszone erforderliche Dissipationsenergien einzutragen. Dabei ist konstruktiv zu gewährleisten, daß bis zu 20 Vol.% Gasanteile in der Flüssigphase mitgefördert werden können.

Das stündliche Umwälzvolumen liegt üblicherweise im Bereich des 5- bis 50-fachen des Gesamtvolumens in den Reaktionszonen.

Besondere Bedeutung beim erfindungsgemäßen Verfahren hinsichtlich Emission an Gasen und flüchtigen Bestandteilen, Sicherheit, und Raum-Zeit-Ausbeute, kommt der Dosierung des für die oxidative Kupplung notwendigen Sauerstoffs in den Reaktionszonen zu. Ein sicherer Betrieb ist dann gewährleistet, wenn die Konzentration des Sauerstoffs im Abgas der zweiten Reaktionszone unterhalb der unteren Explosionsgrenze liegt. Dazu wird die Konzentration des Sauerstoffs im Abgas der zweiten Reaktionszone mit handelsüblichen Meßsonden, z.B. Hersch- oder Clarkzellen, gemessen. Vor Erreichen der kritischen Sauerstoffkonzentration wird Stickstoff als Verdünnung in den Gasraum der zweiten Reaktionszone zugegeben. Alternativ dazu kann zur Vermeidung der kritischen Sauerstoffkonzentration die Zufuhr von Sauerstoff in die erste und/oder zweite Reaktionszone reduziert werden.

Durch die vorgenannten Maßnahmen für die Dosierung des Sauerstoffs wird eine sichere Fahrweise bei niedrigen Emissionswerten erreicht. Eine an der Reaktion und Nebenproduktbildung orientierte kontrollierte Sauerstoffzufuhr ist durch die Ermittlung des in der Flüssigphase gelösten Sauerstoffs in den Reaktionszonen möglich. Diese mikrokinetische Kenngröße erlaubt eine Quantifizierung des Reaktionsfortschritts und damit des tatsächlichen Sauerstoffbedarfs. Der Zeitraum der Oligomerisierungsphase und damit hohen Sauerstoffbedarfs läßt sich von der Polymerisierungsphase, d.h. der Phase mit niedrigerem Sauerstoffbedarf auf Grund dieser Meßgröße abgrenzen.

Unter Oligomerisierungsphase wird der Zeitraum bis zum Erreichen eine Grenzviskosität von ≦0,1 dl/g, gemessen in Chloroform bei 25°C, verstanden.

In Verbindung mit der Messung des Sauerstoffgehaltes im Abgas, läßt sich somit die Sauerstoffdosierung in der Weise regeln, daß während der Reaktion die Konzentration des gelösten Sauerstoffs nach der ersten Reaktionszone größer als 60% der Sättigungskonzentration beträgt und daß bei einer Konzentration gemessen nach oder in der zweiten Reaktionszone zwischen ca. 30%—ca. 80% des Sättigungwertes der Sauerstoffeintrag in die erste und/oder die zweite Reaktionszone reduziert wird.

Die Sättigungskonzentration ist dabei die Gleichgewichtskonzentration beim Arbeitsdruck und bei der Arbeitstemperatur in einer Polymerlösung mit einer Grenzviskosität von 0,4 dl/g, gemessen bei 25°C in Chloroform.

Vorteile dieser Maßnahmen sind ein sicheres Betreiben der Anlage bei maximaler Raum-Zeit-Ausbeute und minimalen Emissionen an Gasen und flüchtigen Bestandteilen.

Nach der Erfindung wird schließlich auch ein überraschend niedriger Gehalt an Nebenprodukten wie 4,4'-Diphenochinonen von kleiner als 0,7% bezogen auf das eingesetzte Phenol, erhalten.

In einer besonders bevorzugten Ausführungsform des erfindungsgemäßen Verfahrens wird die gesamte Reaktionslösung nach Erreichen eines Umsatzes von 80% des insgesamt stöchiometrisch benötigten Sauerstoffs in eine dritte Reaktionszone gefördert und dort bis zum Aufbau einer Grenzviskosität zwischen 0,4 dl/g und 1 dl/g, gemessen bei 25°C in Chloroform, weiterpolymerisiert. In der ersten und zweiten Reaktionszone werden die Monomere zu Oligomeren umgesetzt. Nach deren Überführung in die dritte Reaktionszone stehen somit die erste und zweite Reaktionszone für die Oligomerisierung eines neuen Ansatzes zur Verfügung. Dies hat zur Folge, daß die installierten Apparateteile, die prinzipiell für hohen Sauerstoffbedarf, große Wärmeentwicklung, hohe Umwälzleistungen sowie die Erzeugung einer ausreichend großen Stoffaustauschfläche ausgelegt sind, zu jedem Zeitpunkt optimal nutzbar sind. In der dritten Reaktionszone, in der die Oligomeren zu Polymeren reagieren, sind Wärmetauscher, und Förderaggregate nicht unbedingt erforderlich. Es hat sich gezeigt, daß auf diese Weise eine erhebliche Steigerung der Raum-Zeit-Ausbeute, sowie einem höheren Apparatewirkungsgrad erreichbar sind. Zudem lassen sich die teilweise empfindlichen apparativen Einrichtungen derart nutzen, daß Verkrustungen bzw. Verklebungen der eingesetzten Produkte auch bei hohen Konzentrationen an Phenolen praktisch nicht auftreten.

Im wesentlichen gelangt der für den Aufbau der Polymeren noch notwendige Sauerstoffe in physikalisch gelöster Form aus der ersten und zweiten Reaktionszone zusammen mit der Reaktionslösung in die dritte Reaktionszone. Bei Bedarf kann indes in die dritte Reaktionszone zusätzlich gasförmiger Sauerstoff eindosiert werden. Wegen des nur noch geringen Sauerstoffbedarfs in der dritten Reaktionszone ist eine isotherme Fahrweise auch ohne Kühlkapazitäten, gewährleistet. Emissionen an Gasen und flüchtigen Bestandteilen werden weitgehend vermieden.

Ein Vorrichtung zur Durchführung des Verfahrens nach der Erfindung besteht aus wenigstens zwei Reaktoreinheiten, von denen eine Reaktoreinheit als Treibstrahlreaktor und eine bzw. die weiteren Reaktoreinheit(en) als Rührreaktor(en) ausgebildet sind. In den vorzugsweise kühlbaren Treibstrahlreaktor wird die Flüssigphase über eine Strahldüse im unteren Reaktorteil so zugeführt, daß sie in scharfem Strahl den im Kreuzstrom dazu über ein Gaseinleitungsrohr zudosierten Sauerstoff dispergiert. Diese Primärdispersion wird durch einen im Treibstrahlreaktor oberhalb der Strahldüse angeordneten Impulsaustauschraum feinstdispergiert. Die Ausbildung einer großen Stoffaustauschfläche im Treibstrahlreaktor bewirkt eine hohe Stoffübergangsrate. Wagen der hohen Stoffaustauschleistung verläuft die Reaktion kinetisch kontrolliert. Der Reaktorwirkungsgrad liegt somit nahe eins.

Der Hauptteil der im Treibstrahlreaktor entstehenden Reaktionswärme wird im nachgeschalteten Wärmetauscher abgeführt. Dabei wird soviel Kühlleistung bereitgestellt, daß am Wärmetauscherausgang produktseitig Isothermie eingestellt ist. Der Wärmetauscher ist so auszulegen, daß die den Treibstrahlreaktor verlassende Gas-Flüssigdispersion keine Separierung der Phasen erfährt und die Wärmetauscherwände frei von Belag bleiben. Diese bewirkt das Aufrechterhalten der feinen Gasdispersion und das Erzielen hoher Wärmeübergangszahlen. Zudem wird die den Treibstrahlreaktor verlassende Gas-Flüssigphase dispers gehalten.

Im nachfolgenden Rührreaktor ist somit ein Dispergierorgan nicht erforderlich, sondern lediglich ein Rührorgan, welches durch Ausbildung einer Schichtenströmung ein Aufsteigen der dispersen Gasphase verhindert. Dem im allgemeinen kühlbaren Rührreaktor wird die disperse Reaktionslösung über ein Tauchrohr zugeführt. Im freien Gasraum des Rührreaktors erfolgt die unter Umständen notwendige Inertisierung mit Stickstoff in der Weise, daß ein Konzentrationsgradient innerhalb des Gasraums vermieden wird, wodurch eine sichere Betriebsweise gewährleistet ist.

Für die Aufrechterhalten einer Kreislaufförderung der Reaktionslösung ist nach dem Rührreaktor ein Förderaggregat vorgesehen. Als Förderaggregat kommt eine solche Pumpe in Betracht, bei der Gasantile von bis zu 20 Vol.% die Funktion der Pumpe nicht beeinträchtigt, eine Separation der Gas-Flüssigdispersion aufgrund des Beschleunigungsfeldes in der Pumpe verhindert wird und keine Kavitation auftritt. Als geeignet erwiesen haben sich Kreiskolbenpumpen und Kreiselpumpen, insbesondere Kreiselpumpen mit Leitblechen am Saugstutzen oder auf der Welle angebrachte Inducer. Die Durchsatzleistung der Pumpe ist so zu wählen, daß einerseits die für die Dispergierung der Gasphase im Treibstrahlreaktor notwendige Treibstrahlenergie aufgebracht wird und andererseits im Wärmetauscher eine Strömungsgeschwindigkeit realisierbar ist, welche die Funktion des Wärmetauschers nicht beeinträchtig. Das stündlich umgewälzte Volumen beträgt zweckmäßig das 5- bis 50-fache, vorzugsweise das 6- bis 20-fache des Inhalts des Kreislaufsystems.

Nach einem weiteren Merkmal der Erfindung können sich nach dem Förderaggregat ein oder mehrere, parallel oder in Reihe geschaltete, durch Rohrleitungen mit dem Kreislaufsystem verbundene Rührreaktoren Anschließen. Es ist danach möglich, die oxidative Kupplungsreaktion sowohl kontin-uierlich als auch diskontinuierlich durchzuführen. Bei kontinuierlicher Fahrweise sind die Rührreaktoren in Reihe geschaltet, wobei wenigstens der erste Rührkessel mit einer Einrichtung für die Zufuhr von Sauerstoff ausgerüstet ist. Bei diskontinuierlicher Fahrweise und Verwendung mehrerer Rührreaktoren sind diese parallel geschaltet.

die Erfindung wird nachfolgend unter Hinweis auf die Zeichnungen anhand zweier Ausführungsbeispiele näher erläutert.

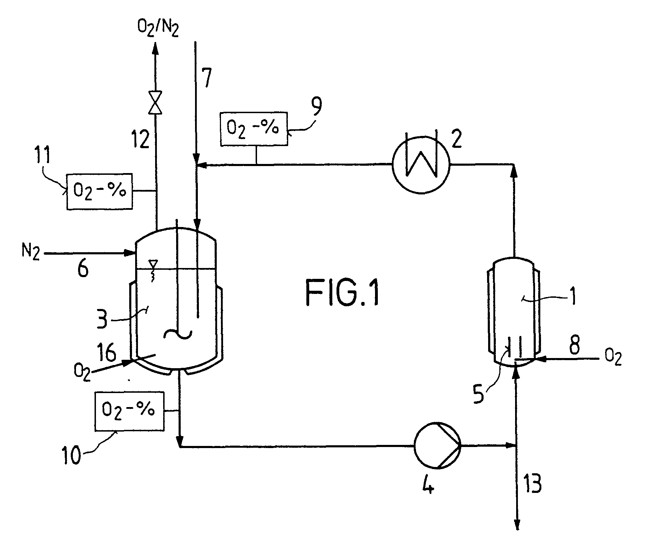

Nach figur 1 sind in einem Kreislaufsystem ein Treibstrahlreaktor (1), ein Wärmetauscher (2), ein Rührreaktor (3) und eine Kreiselpumpe (4) über Rohrleitungen miteinander verbunden. Im unteren Teil des Treibstrahlreaktors ist ein Impulsaustauschraum (5) angedeutet. Nach dem Inertisieren des Kreislaufsystems mit Stickstoff über die Zuleitung (6) wird das erforderliche Volumen des aromatischen $C_7$- bis $C_{10}$-Kohlenwasserstoffs bei (7) so eingebracht, daß bis zu 90% des nutzbaren Kreislaufvolumens gefüllt ist. Der Katalysatorkomplex wird nach Inbetriebnahme des Rührwerks des Rührreaktors (3) und der Kreiselpumpe (4) ebenfalls bei (7) zugeführt. Anschließend erfolgt die Dosierung der zu polymerisierenden Phenolmenge über den selben Zulaufstutzen (7) derart, daß die Zulaufzeit bis zu 90% der insgesamt benötigten Reaktionszeit beträgt.

Mit (8) ist eine Einrichtung für die Zufuhr von Sauerstoff in den Treibstrahlreaktor (1) bezeichnet. Die Konzentration des gelösten Sauerstoffs ist bei (9) und (10) meßbar. Die Meßeinrichtung (11) erfaßt den Sauerstoffgehalt in der Abgasleitung (12). Bei Erreichen einer geforderten Grenzviskosität der Polymerlösung wird diese über eine Rohrleitung (13) den weiteren Verfahrensstuffen zugeführt.

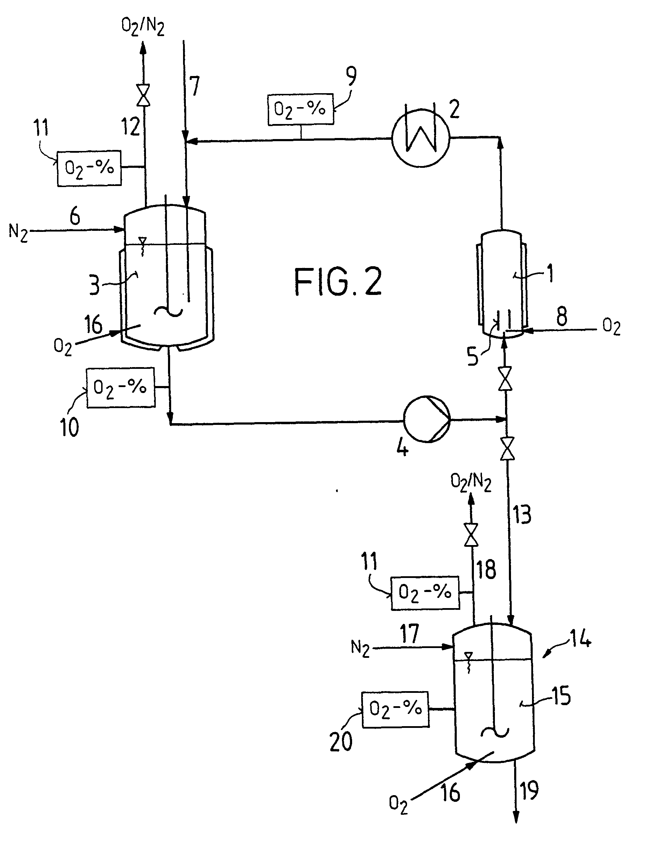

Gemäß Figur 2 mündet die Rohrleitung (13) in einer weiteren Reaktoreinheit (14). Diese umgaßt einen Rührreaktor (15), eine Einrichtung (16) für die Zufuhr von Sauerstoff sowie Rohrleitungen (17) für die Zufuhr von Stickstoff, (18) für die Ableitung des Abgases und (19) für den Austrag des Reaktionsproduktes. An die Abgasleitung (18) ist eine Heßeinrichtung (20) angeschlossen. Eine weitere Meßeinrichtung (20) zur Bestimmung des in der Reaktionslösung gelösten Sauerstoffs ist mit dem Rührreaktor (15) verbunden.

Beispiel 1

In dem in Figur 1 dargestellten Kreislaufsystem wird folgende Mischung vorgelegt:

45,76 Mol Toluol
0,807 Mol Kupfer-I-bromid
1,596 Mol Di-n-butylamin.

In diese, mit einem Durchsatz von 120 l/h umgewälzte, über den Rührreaktor mit 80 l/h Stickstoff inertisierte und auf 25°C temperierte Lösung, wird eine Monomerlösung, bestehend aus:

8,00 Mol 2,6-Dimethylphenol
9,90 Mol Toluol

dem Rührreaktor innerhalb 30 min eindosiert. Die Reaktionslösung wird mit dem Beginn des Monomerenzulaufs mit Sauerstoff im Treibstrahlreaktor begast. Dazu wird zunächst ein Startwert für die Eintragsrate an Sauerstoff von 30 l/h eingestellt. Durch Messung des Sauerstoffgehaltes in der Abgasleitung sowie durch Messung des in der Flüssigphase gelösten Sauerstoffs wird der Sauerstoffeintrag in der Folge in der Weise geregelt, daß bei konstantem Stickstoffeintrag von 80 l/h der Sauerstoffgehalt im Abgas nicht über 4% ansteigt. Nach 60 min Reaktionszeit wird Polyphenylenether mit einer Grenzviskosität von 0,63 dl/g, gemessen bei 25°C in Chloroform, und einem Nebenproduktanteil an Diphenochinon von 0,6%, bezogen auf das eingesetzte Monomere erhalten.

Beispiel 2

Beispiel 1 wurde mit dem Unterschied wiederholt, daß 10 min nach dem Monomerenzulauf die Reaktionslösung aus dem Kreislaufsystem in einen weiteren Rührreaktor (Figur 2) gefördert und dort mit einer konstanten Sauerstoffeintragsrate von 10 l-h weiterbegast wurde.

Nach 120 min Gesamtreaktionszeit wurde Polyphenylenether mit einer Grenzviskosität von 0,66 dl/g, gemessen bei 25°C in Chloroform, und einem Nebenproduktanteil an Diphenochinon von 0,6%, bezogen auf das eingesetzte Monomere, erhalten.

**Patentansprüche**

1. Verfahren zur Herstellung von Polyphenylenether aus einwertigen Phenolen, die in den beiden otho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 15 und 50°C und Drucken zwischen 1 und 10 bar in Anwesenheit eines Katalysatorkomplexes, eines Lösungsmittels und gegebenenfalls eines Aktivators, dadurch gekennzeichnet, daß die Umsetzung der Phenole in wenigstens zwei Reaktionszonen erfolgt, in denen das Lösungsmittel, der Katalysatorkomplex und die Phenole sowie gegebenenfalls der Aktivator ganz oder teilweise vorgelegt und durch ein Förderaggregat umgewälzt werden und daß in der ersten Reaktionszone etwa 60% bis 100% und in der zweiten Reaktionszone 0% bis etwa 40% des für die oxidative Kupplung stöchiometrisch erforderlichen Sauerstoffs eingebracht werden, wobei die in den Reaktionszonen entstehende Reaktionswärme in der Reaktionszone selbst und/oder anschließend abgeführt wird.

2. Verfahren nach Anspruch 1, dadurch gekennzeichnet, daß die Sauerstoffkonzentration in der Gasphase der zweiten Reaktionszone gemessen und bei einer kritischen Sauerstoffkonzentration in den Gasraum der zweiten Reaktionszone Stickstoff zugeführt wird.

3. Verfahren nach Anspruch 1, dadurch gekennzeichnet, daß die Sauerstoffkonzentration in der Gasphase der zweite Reaktionszone gemessen und bei einer kritischen Sauerstoffkonzentration die Zufuhr von Sauerstoff in die erste und/oder zweite Reaktionszone reduziert wird.

4. Verfahren nach Anspruch 1, dadurch gekennzeichnet, daß die Konzentration des in den Reaktionszonen gelösten Sauerstoffs gemessen und in Verbindung mit der Messung des Sauerstoffgehaltes im Abgas als Führungsgröße zur Sauerstoffdosierung verwendet wird.

5. Verfahren nach einem oder mehreren der vorstehenden Ansprüche, dadurch gekennzeichnet, daß die oxidative Kupplungsreaktion in der ersten und zweiten Reaktionszone bis zu einem Umsatz von ≧80% des ingesamt stöchiometrisch benötigten Sauerstoffs und in einer dritten Reaktonszone bis zu Grenzviskositäten von 0,4 bis 1,0 dl/g, gemessen bei 25°C in Chloroform, durchgeführt wird.

6. Verfahren nach Anspruch 5, dadurch gekennzeichnet, daß der dritten Reaktionszone die zum Aufbau der Grenzviskosität von 0,4 bis 1,0 dl/g erforderlichen Sauerstoffmenge zugeführt wird.

7. Vorrichtung zur Durchführung des Verfahrens nach den Ansprüchen 1 bis 4, gekennzeichnet durch wenigstens zwei Reaktoreinheiten, von denen die eine Reaktoreinheit aus einem Treibstrahlreaktor (1) mit einer Einrichtung (8) für die Zufuhr von Sauerstoff und die andere Reaktoreinheit aus einem Rührreaktor (3) besteht, einen oder mehrere Wärmetauscher (2), ein Förderaggregat (4) sowie Rohrleitungen zur Verbindung der Reaktoreinheiten, Wärmetauscher und des Förderaggrgats.

8. Vorrichtung nach Anspruch 7, dadurch gekennzeichnet, daß der Treibstrahlreaktor (1) und/oder der Rührreaktor (3) kühlbar ist bzw. sind.

9. Vorrichtung nach Anspruch 7 zur Durchführung des Verfahrens nach Anspruch 5, gekennzeichnet durch eine mit dem Rührreaktor (3) bzw. dem Treibstrahlreaktor (1) in Verbindung stehende Reaktoreinheit (14).

10. Vorrichtung nach Anspruch 9, dadurch gekennzeichnet, daß die Reaktoreinheit (14) aus einem oder mehreren Rührreaktoren (15) besteht.

11. Vorrichtung nach Ansprüchen 7 bis 10, dadurch gekennzeichnet, daß der bzw. die Rührreaktoren (3) und/oder (15) jeweils eine Einrichtung (16) für die Zufuhr von Sauerstoff aufweisen.

## Revendications

1. Procédé de préparation de poly(éther de phénylène) à partir de monophénols présentant des substituants alkyle dans les deux positions ortho et éventuellement en position méta, mais n'en présentant pas en position para, par une réaction d'addition par oxydation au moyen d'oxygène à des températures comprises entre 15 et 50°C et sous des pressions comprises entre 1 et 10 bars, en présence d'un complexe catalyseur, d'un solvant et éventuellement d'un activateur, caractérisé en ce que la réaction des phénols à lieu dans au moins deux zones de réaction, dans lesquelles le solvant, le complexe catalyseur et les phénols ainsi qu'éventuellement l'activateur sont placés an totalité ou en partie et sont mis en circulation par des moyens de transport et en ce que l'on introduit dans la première zone de réaction environ 60% à 100% et, dans la seconde zone de réaction, 0% à environ 40% de l'oxygène stoechiométriquement nécessaire pour la réaction d'addition par oxydation, la chaleur de réaction engendrée dans les zones de réaction étant dissipée dans la zone de réaction elle-même et/ou à la suite de cette zone.

2. Procédé suivant la revendication 1, caractérisé en ce que la concentration en oxygène de la phase gazeuse de la seconde zone de réaction est mesurée et, si elle est critique, de l'azote est introduit dans l'espace gazeux de la seconde zone de réaction.

3. Procédé suivant la revendication 1, caractérisé en ce que la concentration en oxygène de la phase gazeuse de la seconde zone de réaction est mesurée et, si elle est critique, on réduit l'introduction d'oxygène dans la première et/ou la seconde zone de réaction.

4. Procédé suivant la revendication 1, caractérisé en ce que la concentration de l'oxygène dissous dans les zones de réaction est mesurée et, compte tenu de la mesure de la teneur en oxygène du gaz d'échappement, est utilisée comme grandeur de référence pour le réglage de la dose d'oxygène introduite.

5. Procédé suivant l'une quelconque des revendications précédentes, caractérisé en ce que l'on effectue la réaction d'addition par oxydation, dans les première et seconde zones de réaction, jusqu'à un taux de conversion supérieure ou égal à 80% de l'oxygène au total stoechiométriquement nécessaire et, dans une troisième zone de réaction, jusqu'à des viscosités limites de 0,4 à 1,0 dl/g, mesurées à 25°C dans le chloroforme.

6. Procédé suivant la revendication 5, caractérisé en ce que l'on amène dans la troisième zone de réaction la quantité d'oxygène nécessaire pour l'obtention de la viscosité limite de 0,4 à 1,0 dl/g.

7. Dispositif pour la mise en oeuvre du procédé suivant les revendications 1 à 4, caractérisé par au moins deux unités de réaction, dont l'une consiste en un réacteur à jet d'entraînement (1) pourvu d'un dispositif (8) pour l'introduction d'oxygène et dont l'autre consiste en un réacteur mélangeur (3), par un ou plusieurs échangeurs de chaleur (2), des moyens de transport (4) ainsi que par des canalisations pour relier les unités de réaction, les échangeurs de chaleur et les moyens de transport.

8. Dispositif suivant la revendication 7, caractérisé en ce que le réacteur à jet d'entraînement (1) et/ou le réacteur mélangeur (3) peut ou peuvent être refroidis.

9. Dispositif suivant la revendication 7 pour la mise en oeuvre du procédé suivant la revendication 5, caractérisé par une unité de réaction (14) reliée au réacteur mélangeur (3) et au réacteur à jet d'entraînement (1) le cas échéant.

10. Dispositif suivant la revendication 9, caractérisé en ce que l'unité de réaction (14) consiste en un ou plusieurs réacteurs mélangeurs (15).

11. Dispositif suivant l'une quelconque des revendications 7 à 10, caractérisé en ce que le ou les réacteurs mélangeurs (3) et/ou (15) présentent chacun un dispositif (6) d'amenèe d'oxygène.

**Claims**

1. A process for the preparation of a polyphenylene ether from a monohydric phenol, which possesses alkyl substituents in the two ortho-positions and, if desired, in the meta-position, but not in the para-position, by an oxidative coupling reaction with oxygen at from 15 to 50°C and under from 1 to 10 bar in the presence of a catalyst complex, of a solvent and, if required, of an activator, wherein the conversion of the phenol is carried out in two or more reaction zones in which some or all of the solvent, the catalyst complex and the phenol and, where relevant, the activator is initially taken and is circulated by means of a conveying unit, and about 60—100% of the stoichiometric amount of oxygen required in the oxidative coupling are introduced into the first reaction zone while from 0 to about 40% of the said stoichiometric amount is introduced into the second reaction zone, the heat of reaction produced in the reaction zones being removed in the reaction zone itself and/or downstream of this.

2. A process as claimed in claim 1, wherein the oxygen concentration in the gas phase of the second reaction zone is measured and nitrogen is fed in at a critical oxygen concentration in the gas space of the second reaction zone.

3. A process as claimed in claim 1, wherein the oxygen concentration in the gas phase of the second reaction zone is measured and the feed of oxygen into the first and/or second reaction zone is reduced at a critical oxygen concentration.

4. A process as claimed in claim 1, wherein the concentration of the oxygen dissolved in the reaction zones is measured and is used, in conjunction with the measurement of the oxygen content of the waste gas, as a control parameter for the metering of oxygen.

5. A process as claimed in one or more of the preceding claims, wherein the oxidative coupling reaction in the first and second reaction zone is carried out to a conversion of ≥80% of the total stoichiometric amount of oxygen required and in a third reaction zone is carried out until an intrinsic viscosity of from 0.4 to 1.0 dl/g, measured at 25°C in chloroform is reached.

6. A process as claimed in claim 5, wherein the amount of oxygen required for building up the intrinsic viscosity of from 0.4 to 1.0 dl/g is fed into the third reaction zone.

7. Apparatus for carrying out the process as claimed in any of claims 1 to 4, which comprises two or more reactor units, one of which consists of a jet reactor (1) having an apparatus (8) for feeding in oxygen and the other consists of a stirred reactor (3), and one or more heat exchangers (2), a conveying unit (4) and pipelines for connecting the reactor units, the heat exchangers and the conveying unit.

8. Apparatus as claimed in claim 7, wherein the jet reactor (1) and/or the stirred reactor (3) is or are capable of being cooled.

9. Apparatus as claimed in claim 7 for carrying out the process as claimed in claim 5, which comprises a reactor unit (14) connected to the stirred reactor (3) or to the jet reactor (1).

10. Apparatus as claimed in claim 9, wherein the reactor unit (14) consists of one or more stirred reactors (15).

11. Apparatus as claimed in any of claims 7 to 10, wherein the stirred reactor or reactors (3) and/or (15) each has an apparatus (16) for feeding in oxygen.

EP 0 182 206 B1

FIG.1

FIG. 2